# EUROPÄISCHE PATENTANMELDUNG

(11) **EP 2 070 820 A2**
(43) Veröffentlichungstag der Anmeldung: **17.06.2009**
(21) Anmeldenummer: 08021266.5
(22) Anmeldetag: 08.12.2008
(51) Int. Cl.: B65B 1/36, B65B 37/08

(54) **Vorrichtung zum Einlegen von Lebensmitteln in eine Verpackung**

(30) Priorität: 10.12.2007 DE 102007059649
(71) Anmelder: Stimpfl, Christof, 88267 Vogt (DE)
(72) Erfinder: Stimpfl, Christof, 88267 Vogt (DE)
(74) Vertreter: Weiss, Peter

(57) **Zusammenfassung**

Bei einer Vorrichtung zum Einlegen von Lebensmittel in eine Verpackung (13) sind die Lebensmittel in Kammern (17.1 bis 17.4) eines Zellenrades (11) sammelbar. Dabei soll der Kammer (17.1 bis 17.4) ein entfernbarer Deckel (19) zugeordnet sein.

## Beschreibung

Die Erfindung betrifft eine Vorrichtung zum Einlegen von Lebensmitteln in eine Verpackung, wobei die Lebensmittel in Kammern eines Zellenrades sammelbar sind.

### Stand der Technik

Insbesondere bei der Verpackung und dem Transport von Lebensmitteln ist heute noch sehr viel händische Tätigkeit notwendig. Dies gilt insbesondere für die Verpackung von Würsten. Das bedeutet, dass aber der Aufwand für Vereinzelung und Verpackung erheblich ist. Ferner ist die händische Arbeit vom hygienischen Gesichtspunkt her kritisch.

In der DE 43 34 238 A1 wird eine Vorrichtung zum Verpacken von insbesondere Würsten beschrieben, welche über eine Zufuhreinrichtung in eine Verpackungsstation gelangen. Dort soll oberhalb von einem Verpackungsmittel zumindest ein Zellenrad angeordnet sein, wobei Zellenrad und Verpackungsmittel relativ zueinander bewegbar sind. Diese Vorrichtung ist sehr gut zum Verpacken von einzelnen Würsten geeignet, jedoch nicht zum Verpacken von einer Mehrzahl von Würsten.

Für eine Verpackung von einer Mehrzahl von Würsten erscheint die DE 101 24 712 A1 geeignet. Dort werden die Würste über einen Schrägförderer nach oben befördert und gelangen durch einen Schacht in ein Zellenrad. Dieses Zellenrad dreht über der Verpackungslinie und gibt die Würste in entsprechende Verpackungseinheiten ab. Diese Vorrichtung hat allerdings den Nachteil, dass die Würste über eine längere Strecke frei durch den Schacht bis zum Zellenrad fallen.

### Aufgabe

Die vorliegende Erfindung hat die Aufgabe, eine Vorrichtung soweit zu verbessern, dass mit ihr ein vollautomatisches und hygienisches Einlegen von Lebensmitteln in eine entsprechende Verpackung ohne die Gefahr von Beschädigungen möglich ist.

### Lösung der Aufgabe

Zur Lösung der Aufgabe führt zum einen, dass der Kammer ein entfernbarer Deckel zugeordnet ist.

Mit diesem Deckel wird die Kammer verschlossen, sodass eine Bewegung des Lebensmittels in der Kammer begrenzt ist. Dadurch bleibt das Lebensmittel bevorzugt in der Kammer richtig positioniert und ist keiner Beschädigung ausgesetzt.

Da der Deckel beim Befüllen der Kammer entfernt sein muss, soll der Deckel nur im Bereich einer vorgegebenen Drehung des Zellenrads die Kammer abdecken. In einem bevorzugten Ausführungsbeispiel nimmt das Zellenrad den Deckelkopf vor Erreichung der Lage zum Entleeren der Kammer mit bzw. zumindest in dem Bereich, in dem die Gefahr besteht, dass das Lebensmittel aus der Kammer fällt. Sobald dann die Kammer die Endlage zum Entleeren in eine Blisterschale oder dergleichen erreicht hat, soll der Deckel entfernt werden. Dies geschieht der Einfachheit halber dadurch, dass eine Verbindung, wie beispielsweise ein Anhängen des Deckels an das Zellenrad, aufgehoben wird und der Deckel wieder zurück in seine Ausgangslage gebracht wird. Dies kann ebenfalls der Einfachheit halber dadurch geschehen, dass der Deckel mit einem entsprechenden Kraftspeicher, beispielsweise mit einer Feder verbunden ist, die den Deckel in seine Ausgangslage zurückführt. Hier sind jedoch ebenso wie für das Verbinden des Deckels mit dem Zellenrad eine Vielzahl von Möglichkeiten denkbar, die von der vorliegenden Erfindung umfasst sein sollen.

Ein zweiter Teil der Erfindung bezieht sich darauf, dass das Volumen der Kammer zum Ausbringen des Lebensmittels in die Verpackung veränderbar ist. Hierdurch wird das Ausbringen des Lebensmittels auch bei beispielsweise haftenden Lebensmitteln gewährleistet und ausserdem beschleunigt. In einem bevorzugten Ausführungsbeispiel soll ein Boden der Kammer bewegbar sein, was beispielsweise durch einen pneumatischen Zylinder geschehen kann. Selbstverständlich sind auch andere Ausbringungsmittel denkbar, beispielsweise kann dies durch entsprechende Stifte geschehen, die den Boden durchgreifen oder auch durch Druckluft, usw.

Desweiteren soll in einem bevorzugten Ausführungsbeispiel dem Zellenrad eine Fördereinrichtung zugeordnet sein. Diese ist in einem geeigneten Fall auf das zu fördernde Lebensmittel abgestimmt. In der Regel dürfte es sich dabei um entsprechende Förderbänder bzw. Transportbänder handeln, wobei zumindest ein Übergabeband zum Zellenrad in seiner Länge veränderbar sein sollte, damit das Übergabeband auch der Bewegung des Zellenrads folgen kann. In der Fördereinrichtung erfolgt ein beschleunigter Transport und bevorzugt auch eine Positionierung des Lebensmittels. Die vorliegende Vorrichtung ist insbesondere zur Verpackung von Würsten geeignet. Hierzu sind einer Mehrzahl von Vorrichtungen zum Trennen von Würsten von einem Wurststrang auch eine Mehrzahl von Fördereinrichtungen und eine Mehrzahl von Zellenrädern zugeordnet, welche nebeneinander arbeiten und mit denen die Würste positioniert und portioniert entsprechend der gewünschten Anzahl im Blisterbehälter eingelegt werden.

### Figurenbeschreibung

Weitere Vorteile, Merkmale und Einzelheiten der Erfindung ergeben sich aus der nachfolgenden Beschreibung bevorzugter Ausführungsbeispiele sowie anhand der Zeichnung; diese zeigt in

Figur 1 eine schematische Seitenansicht einer erfindungsgemässen Vorrichtung zum Einlegen von Lebensmitteln in eine Verpackung;

Figur 2 eine ebenfalls schematische, vergrösserte Seitenansicht eines Ausschnitts aus der Vorrichtung gemäss Figur 1 in einer bevorzugten Ausführungsform.

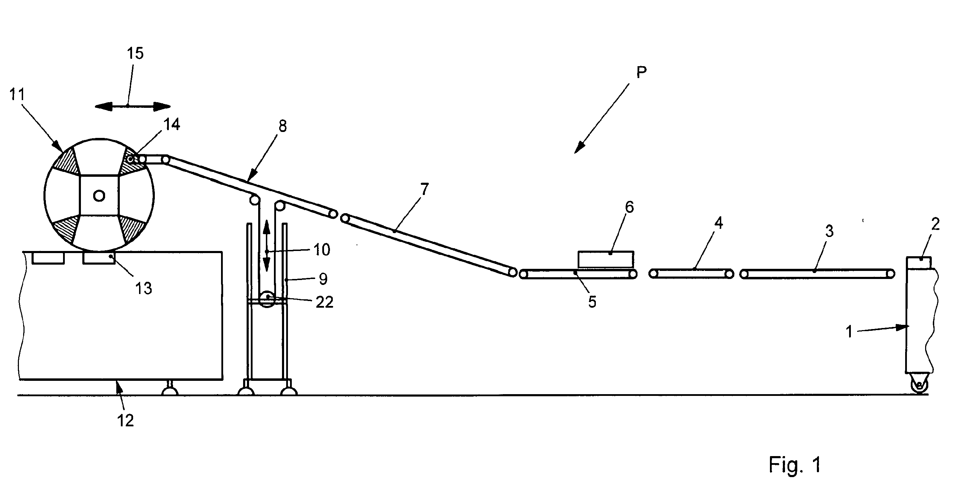

Gemäss Figur 1 ist im rechten Bereich der erfindungsgemässen Vorrichtung P zum Einlegen von Lebensmitteln eine Einrichtung zum Trennen von Würsten von einem Wurststrang teilweise angedeutet, wie sie beispielsweise in den DE 42 18 783 oder DE 43 18 301 genauer beschrieben sind. Auf diese Schriften wird hier besonders Bezug genommen, sodass sich eine nähere Beschreibung dieser Trenneinrichtungen erübrigt.

Der Trenneinrichtung 1 ist ein erstes Transportband 3 nachgeordnet, welches in etwa mit der gleichen Geschwindigkeit läuft, wie die Zwillingsbänder 2, sodass die Würste in geeigneter Weise von den Zwillingsbändern 2 übernommen werden können.

An das Transportband 3 schliesst ein Schiessband 4 an, welches erheblich schneller läuft, als das Transportband 3. Im vorliegend gezeigten Ausführungsbeispiel ist das Schiessband 4 relativ kurz dargestellt, es kann jedoch eine beliebige Länge aufweisen.

Auf das Schiessband 4 folgt ein erstes Positionierband 5, dem ein Schieber 6 zugeordnet ist. Dieser Schieber 6 ist in geeigneter Weise quer zur Förderrichtung bewegbar. Durch ihn können die Würste in eine gewünschte Position gebracht werden.

Auf das Positionierband 5 folgt ein weiteres Positionierband 7 als Schrägförderband, an das letztendlich ein in seiner Länge veränderbares Transportband 8 anschliesst. Dieses Transportband 8 läuft teilweise in einem Speichergestell 9, in dem sich eine Umlenkrolle 22 vertikal bewegbar befindet, was durch den Doppelpfeil 10 angedeutet ist. Im übrigen wird ein derartiges in seiner Länge veränderbares Transportband auch in der DE 43 34 238 A1 beschrieben, weshalb auf diese Schrift besonders Bezug genommen wird. Hierdurch ist es möglich, dass das Transportband 8 einer Bewegung eines Zellenrades 11 entlang einer Verpackungslinie 12 folgen kann, in welcher sich aufeinanderfolgend Blisterschalen 13 befinden. Dabei folgt insbesondere eine Umlenkrolle 14 diesem Zellenrad 11 entlang des Doppelpfeils 15.

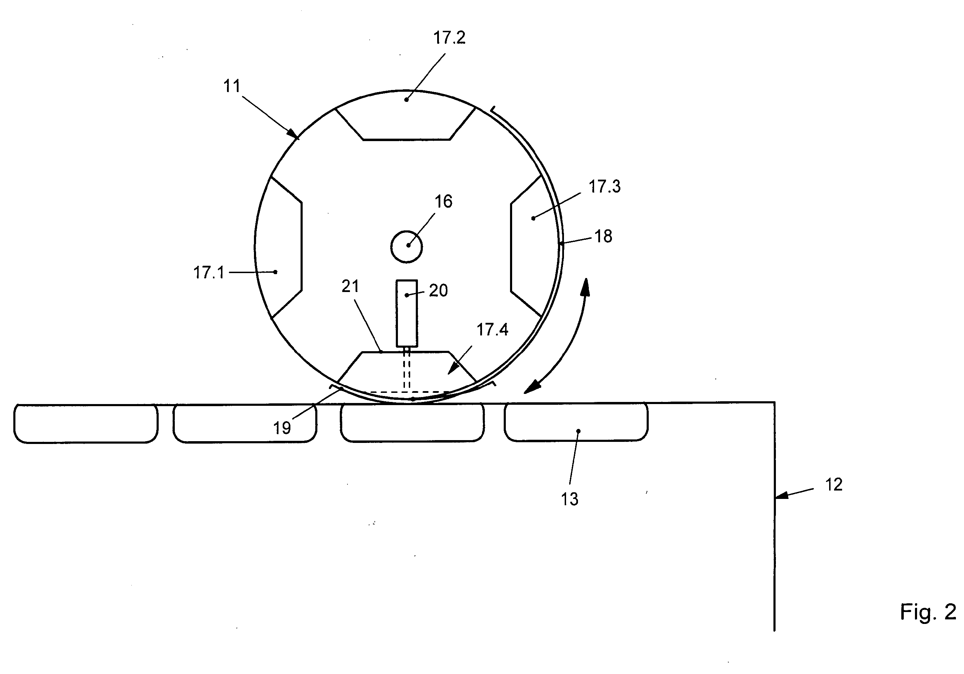

Ein bevorzugtes Zellenrad 11 ist insbesondere in Figur 2 dargestellt. Verteilt um eine Mittelachse 16, um die auch das Zellenrad 11 dreht, sind vier Kammern 17.1 bis 17.4 angeordnet. Die Kammern 17.1 und 17.2 sind offen, während die Kammer 17.3 von einer Deckschale 18 abgedeckt ist. An diese Deckschale 18 schliesst ein Deckel 19 an, der in der gezeigten Gebrauchslage die Kammer 17.4 abdeckt. Dieser Deckel 19 wird bei Drehung des Zellenrades 11 um die Mittelachse 16 folgend auf die Deckschale 18 von einem beliebigen Mitnehmer an dem Zellenrad 11 mitgenommen, sodass er, beispielsweise gegen die Kraft eines Kraftspeichers, mit dem Zellenrad 11 dreht und die Kammer 17.4 solange geschlossen hält, bis sie ihre in Figur 2 gezeigte Entleerposition über einer Blisterschale 13 erreicht hat. Danach wird der Deckel 19 von dem Zellenrad 11 gelöst, sodass er unter dem Zug des Kraftspeichers wieder in seine Ausgangsposition zurückgelangt und dabei die Kammer 17.4 öffnet.

Ein Kammerboden 20 der Kammern 17.1 bis 17.4 wird in der in Figur 2 gezeigten Gebrauchslage von einem pneumatischen Zylinder 21 mit Druck beaufschlagt, sodass er in eine gestrichelt angedeutete Position gelangen kann.

### Die Funktionsweise der vorliegenden Erfindung ist folgende:

Von einem nicht mehr gezeigten Wurststrang abgetrennte Würste gelangen mittels der Zwillingsbänder 2 aus der Trenneinrichtung 1 auf das Transportband 3. Von diesem werden die Würste auf das Schiessband 4 übergeben, wobei auf dem Schiessband 4 die Transportgeschwindigkeit wesentlich erhöht wird. Vor der Verpackungslinie 12 gelangen die Würste auf das erste Positionierband 5 und werden dort mittels des Schiebers 6 positioniert. Danach werden sie auf das schräge Positionierband 7 übergeben und gelangen auf das längenveränderbare Transportband 8. Von dort werden sie in die jeweilige Kammer 17.1 bis 17.4 des Zellenrades 11 eingefüllt, bis eine gewünschte Anzahl an Würsten sich in der jeweils obersten Kammer befindet. Die jeweils unterste Kammer 17.4 befindet sich dabei in der Entleerposition über einer Blisterschale 13, während sich die beiden Kammern 17.1 und 17.3 in einer Zwischenlage befinden. Die Kammer 17.1 ist dabei leer, während die Kammer 17.3 gefüllt, jedoch durch die Deckschale 18 abgedeckt ist. Nebenbei sei bemerkt, dass die Deckschale 18 selbstverständlich auch einstückig mit dem Deckel 19 und mit diesem bewegbar ausgebildet sein kann.

Nachdem die Kammer 17.2 mit Würsten befüllt ist, dreht das Zellenrad 11 weiter, wobei es über der Verpackungslinie 12 zur nächsten Blisterschale 13 bewegt wird. Dabei gelangt die Kammer 17.3 in die unterste Position, wobei sie den Deckel 19 bei der Drehbewegung mitnimmt und über den Deckel 19 abgedeckt ist. Bei Erreichen der Endlage wird die Verbindung zwischen Deckel 19 und Zellenrad 11 aufgehoben, sodass der Deckel 19 in seine Ausgangsposition zurückschnellen kann und die Kammer 17.3 freigibt. Deren bewegbarer Kammerboden 20 wird jetzt von dem pneumatischen Zylinder 21 mit Druck beaufschlagt, sodass dieser Boden 20 in die gestrichelte Lage gelangt und dabei die Würste in die Blisterschale 13 ausstösst.

**Bezugszeichenliste**

| | | | | | |
|---|---|---|---|---|---|
| 1 | Trenneinrichtung | 34 | | 67 | |
| 2 | Zwillingsband | 35 | | 68 | |
| 3 | Transportband | 36 | | 69 | |
| 4 | Schiessband | 37 | | 70 | |
| 5 | Positionierband | 38 | | 71 | |
| 6 | Schieber | 39 | | 72 | |
| 7 | Positionierband | 40 | | 73 | |
| 8 | Transportband | 41 | | 74 | |
| 9 | Speichergestell | 42 | | 75 | |
| 10 | Doppelpfeil | 43 | | 76 | |
| 11 | Zellenrad | 44 | | 77 | |
| 12 | Verpackungslinie | 45 | | 78 | |
| 13 | Blisterschale | 46 | | 79 | |
| 14 | Umlenkrolle | 47 | | | |
| 15 | Doppelpfeil | 48 | | | |
| 16 | Mittelachse | 49 | | | |
| 17 | Kammer | 50 | | | |
| 18 | Deckschale | 51 | | | |
| 19 | Deckel | 52 | | | |
| 20 | Kammerboden | 53 | | | |
| 21 | Pneumatischer Zylinder | 54 | | | |
| 22 | Umlenkrolle | 55 | | | |
| 23 | | 56 | | | |
| 24 | | 57 | | | |
| 25 | | 58 | | | |
| 26 | | 59 | | | |
| 27 | | 60 | | | |
| 28 | | 61 | | | |
| 29 | | 62 | | | |
| 30 | | 63 | | | |
| 31 | | 64 | | | |
| 32 | | 65 | | | |
| 33 | | 66 | | | |

## Patentansprüche

1. Vorrichtung zum Einlegen von Lebensmittel in eine Verpackung (13), wobei die Lebensmittel in Kammern (17.1 bis 17.4) eines Zellenrades (11) sammelbar sind,
**dadurch gekennzeichnet,**
**dass** der Kammer (17.1 bis 17.4) ein entfernbarer Deckel (19) zugeordnet ist.

2. Vorrichtung zum Einlegen von Lebensmittel in eine Verpackung (13), wobei die Lebensmittel in Kammern (17.1 bis 17.4) eines Zellenrades (11) sammelbar sind, **dadurch gekennzeichnet, dass** das Volumen der Kammer (17.1 bis 17.4) zum Ausbringen des Lebensmittels in die Verpackung (13) veränderbar ist.

3. Vorrichtung nach Anspruch 2, **dadurch gekennzeichnet, dass** ein Boden (20) der Kammer (17.1 bis 17.4) bewegbar ist.

4. Vorrichtung nach Anspruch 3, **dadurch gekennzeichnet, dass** dem Boden (20) der Kammer (17.1 bis 17.4) ein pneumatischer Zylinder (21) zugeordnet ist.

5. Vorrichtung nach wenigstens einem der Ansprüche 1 bis 4, **dadurch gekennzeichnet, dass** der Deckel (19) beim Drehen des Zellenrades (11) von diesem mitnehmbar ist.

6. Vorrichtung nach Anspruch 5, **dadurch gekennzeichnet, dass** der Deckel (19) mit einem Kraftspeicher verbunden ist.

7. Vorrichtung nach Anspruch 5 oder 6, **dadurch gekennzeichnet, dass** dem Deckel (19) eine Einrichtung zum Lösen von dem Zellenrad (11) zugeordnet ist.

8. Vorrichtung nach wenigstens einem der Ansprüche 1 bis 7, **dadurch gekennzeichnet, dass** dem Zellenrad (11) eine Fördereinrichtung für die Lebensmittel zugeordnet ist.

9. Vorrichtung nach Anspruch 8, **dadurch gekennzeichnet, dass** das Zellenrad (11) über die Verpackung (13) bewegbar ist und die Fördereinrichtung dieser Bewegung folgt.

10. Vorrichtung nach Anspruch 8 oder 9, **dadurch gekennzeichnet, dass** die Fördereinrichtung zumindest ein in seiner Länge veränderbares Transportband (8) aufweist.

11. Vorrichtung nach wenigstens einem der Ansprüche 8 bis 10, **dadurch gekennzeichnet, dass** die Fördereinrichtung zumindest ein Positionierband (5,7) aufweist.

12. Vorrichtung nach wenigstens einem der Ansprüche 8 bis 11, **dadurch gekennzeichnet, dass** die Fördereinrichtung zumindest ein Schiessband (4) aufweist.

13. Vorrichtung nach wenigstens einem der Ansprüche 1 bis 12, **dadurch gekennzeichnet, dass** eine Mehrzahl von Zellenrädern (11) nebeneinander angeordnet ist.

14. Vorrichtung nach wenigstens einem der Ansprüche 1 bis 13, **dadurch gekennzeichnet, dass** es sich bei der Verpackung um eine Blisterverpackung (13) handelt.

15. Vorrichtung nach wenigstens einem der Ansprüche 1 bis 14, **dadurch gekennzeichnet, dass** es sich bei dem Lebensmittel um Würste handelt.
